# EUROPEAN PATENT APPLICATION

(11) **EP 3 764 432 A1**
(43) Date of publication of application: **13.01.2021**
(21) Application number: 19764544.3
(22) Date of filing: 05.03.2019
(51) Int. Cl.: H01M 4/13, H01M 4/62, H01M 10/0566

(54) **BINDER COMPOSITION FOR NON-AQUEOUS SECONDARY BATTERY, PRODUCTION METHOD FOR BINDER COMPOSITION FOR NON-AQUEOUS SECONDARY BATTERY, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(30) Priority: 07.03.2018 JP 2018040484
(71) Applicant: Zeon Corporation, Tokyo 100-8246 (JP)
(72) Inventor: AKABANE Tetsuya, Tokyo 100-8246 (JP); KIDOKORO Hiroto, Tokyo 100-8246 (JP); HOTTA Karin, Tokyo 100-8246 (JP)
(74) Representative: Maiwald Patent- und Rechtsanwaltsgesellschaft mbH
(86) International application number: PCT/JP2019/008705
(87) International publication number: WO 2019/172281

(57) **Abstract**

Provided is a binder composition for a non-aqueous secondary battery electrode that can form an electrode having excellent peel strength and a secondary battery having excellent cycle characteristics. The binder composition for a non-aqueous secondary battery electrode contains a hindered phenol antioxidant and a particulate polymer formed of a graft polymer that includes a hydrophilic graft chain and that is obtained through a graft polymerization reaction of 1 part by mass to 40 parts by mass, in total, of either or both of a hydrophilic monomer and a macromonomer with 100 parts by mass of core particles containing a block copolymer that includes an aromatic vinyl block region formed of an aromatic vinyl monomer unit and an isoprene block region formed of an isoprene unit, and in which proportional content of the isoprene block region is 70 mass% to 99 mass%.

## Description

### TECHNICAL FIELD

The present disclosure relates to a binder composition for a non-aqueous secondary battery electrode, a method of producing a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

In order to further improve the performance of secondary batteries, attempts have been made in recent years to improve binder compositions used in electrode mixed material layer formation.

Specifically, Patent Literature (PTL) 1 and 2 propose a technique of including an antioxidant in a binder composition from a viewpoint of improving secondary battery cycle characteristics, for example.

### CITATION LIST

### Patent Literature

PTL 1: WO2009/107778A1
PTL 2: KR10-0993129B1

### SUMMARY

### (Technical Problem)

However, a conventional antioxidant-containing binder composition for a non-aqueous secondary battery electrode such as described above leaves room for improvement in terms of improving cycle characteristics of a secondary battery while also further improving peel strength of an electrode formed using the binder composition.

Accordingly, one object of the present disclosure is to provide a binder composition for a non-aqueous secondary battery electrode and a slurry composition for a non-aqueous secondary battery electrode that can form an electrode having excellent peel strength and a secondary battery having excellent cycle characteristics.

Another object of the present disclosure is to provide an electrode for a non-aqueous secondary battery that has excellent peel strength and can form a secondary battery having excellent cycle characteristics, and also to provide a non-aqueous secondary battery that has excellent cycle characteristics.

### (Solution to Problem)

The inventors conducted diligent investigation with the aim of solving the problems set forth above. The inventors discovered that an electrode having excellent peel strength and a secondary battery having excellent cycle characteristics are obtained by using a binder composition that contains a particulate polymer formed of a specific polymer and a specific antioxidant, and, in this manner, the inventors completed the present disclosure.

Specifically, the present disclosure aims to advantageously solve the problems set forth above, and a presently disclosed binder composition for a non-aqueous secondary battery electrode comprises: a particulate polymer formed of a graft polymer that includes a hydrophilic graft chain and that is obtained through a graft polymerization reaction of not less than 1 part by mass and not more than 40 parts by mass, in total, of either or both of a hydrophilic monomer and a macromonomer with 100 parts by mass of core particles containing a block copolymer that includes an aromatic vinyl block region formed of an aromatic vinyl monomer unit and an isoprene block region formed of an isoprene unit, and in which proportional content of the isoprene block region is not less than 70 mass% and not more than 99 mass%; and a hindered phenol antioxidant. Through inclusion of a particulate polymer formed of a specific polymer and a specific antioxidant in this manner, peel strength of an electrode and cycle characteristics of a secondary battery formed using the binder composition can be improved.

A "monomer unit" of a polymer referred to in the present disclosure is a "repeating unit derived from the monomer that is included in a polymer obtained using the monomer".

Moreover, when a polymer is said to "include a block region formed of a monomer unit" in the present disclosure, this means that "a section in which only monomer units of that type are bonded to one another in a row as repeating units is present in the polymer".

Furthermore, the "proportional content of an isoprene block region" referred to in the present disclosure can be measured by ¹H-NMR.

The presently disclosed binder composition for a non-aqueous secondary battery electrode preferably further comprises a phosphite antioxidant. Through further inclusion of a phosphite antioxidant, peel strength of an electrode and cycle characteristics of a secondary battery formed using the binder composition can be further improved.

The presently disclosed binder composition for a non-aqueous secondary battery electrode preferably further comprises a metal trapping agent. Through further inclusion of a metal trapping agent, peel strength of an electrode and cycle characteristics of a secondary battery formed using the binder composition can be further improved.

In the presently disclosed binder composition for a non-aqueous secondary battery electrode, the particulate polymer preferably has a median diameter of not less than 0.6 µm and not more than 2.5 µm. When the median diameter of the particulate polymer is within the range set forth above, peel strength of an electrode and cycle characteristics of a secondary battery formed using the binder composition can be further improved.

The "median diameter of a particulate polymer" referred to in the present disclosure can be measured by a method described in the EXAMPLES section of the present specification.

In the presently disclosed binder composition for a non-aqueous secondary battery electrode, it is preferable that the hydrophilic graft chain includes an acidic group, and the particulate polymer has a surface acid content of not less than 0.02 mmol/g and not more than 1.0 mmol/g. When the surface acid content of the particulate polymer is within the range set forth above, peel strength of an electrode and cycle characteristics of a secondary battery formed using the binder composition can be further improved.

The "surface acid content" of a particulate polymer referred to in the present disclosure is the surface acid content per 1 g of solid content of the particulate polymer and can be measured by a measurement method described in the EXAMPLES section of the present specification.

It is preferable that the presently disclosed binder composition for a non-aqueous secondary battery electrode further comprises a particulate binder and that the particulate binder is formed of either or both of a styrene-butadiene copolymer and an acrylic polymer. Through further inclusion of a particulate binder formed of a styrene-butadiene copolymer and/or a particulate binder formed of an acrylic polymer, cycle characteristics of a secondary battery formed using the binder composition can be further improved.

In the presently disclosed binder composition for a non-aqueous secondary battery electrode, content of the particulate polymer is preferably not less than 50 mass% and not more than 90 mass% of total content of the particulate polymer and the particulate binder. When the content of the particulate polymer is within the range set forth above, peel strength of an electrode and cycle characteristics of a secondary battery formed using the binder composition can be further improved.

Moreover, the present disclosure aims to advantageously solve the problems set forth above, and a presently disclosed slurry composition for a non-aqueous secondary battery electrode comprises: an electrode active material; and any one of the binder compositions for a non-aqueous secondary battery electrode set forth above. Through inclusion of the binder composition for a non-aqueous secondary battery electrode set forth above in this manner, peel strength of an electrode and cycle characteristics of a secondary battery formed using the slurry composition can be improved.

Furthermore, the present disclosure aims to advantageously solve the problems set forth above, and a presently disclosed electrode for a non-aqueous secondary battery comprises an electrode mixed material layer formed using the slurry composition for a non-aqueous secondary battery electrode set forth above. By using the slurry composition for a non-aqueous secondary battery electrode set forth above in this manner, an electrode that has excellent peel strength and that can form a secondary battery having excellent cycle characteristics is obtained.

Moreover, the present disclosure aims to advantageously solve the problems set forth above, and a presently disclosed non-aqueous secondary battery comprises a positive electrode, a negative electrode, a separator, and an electrolyte solution, wherein at least one of the positive electrode and the negative electrode is the electrode for a non-aqueous secondary battery set forth above. A non-aqueous secondary battery having excellent cycle characteristics is obtained by using the electrode for a non-aqueous secondary battery set forth above.

Furthermore, the present disclosure aims to advantageously solve the problems set forth above, and a presently disclosed method of producing a binder composition for a non-aqueous secondary battery electrode is a method of producing the binder composition for a non-aqueous secondary battery electrode set forth above, comprising: a step of obtaining core particles by emulsifying a mixture containing a hindered phenol antioxidant, an aqueous medium, and a solution of a block copolymer that includes an aromatic vinyl block region formed of an aromatic vinyl monomer unit and an isoprene block region formed of an isoprene unit, and in which proportional content of the isoprene block region is not less than 70 mass% and not more than 99 mass%; and a step of obtaining a particulate polymer formed of a graft polymer by providing the core particles with a hydrophilic graft chain. By obtaining core particles by emulsifying a mixture containing a hindered phenol antioxidant, an aqueous medium, and a solution of a block copolymer, and subsequently obtaining a particulate polymer formed of a graft polymer by providing the core particles with a hydrophilic graft chain in this manner, it is easy to obtain the binder composition for a non-aqueous secondary battery electrode set forth above.

In the presently disclosed method of producing a binder composition for a non-aqueous secondary battery electrode, the mixture preferably further contains a phosphite antioxidant. Through further inclusion of a phosphite antioxidant, a binder composition that can further improve peel strength of an electrode and cycle characteristics of a secondary battery is obtained.

In the presently disclosed method of producing a binder composition for a non-aqueous secondary battery electrode, the mixture preferably further contains a metal trapping agent. Through further inclusion of a metal trapping agent, a binder composition that can further improve peel strength of an electrode and cycle characteristics of a secondary battery is obtained.

In the presently disclosed method of producing a binder composition for a non-aqueous secondary battery electrode, it is preferable that the mixture further contains a coupling agent and that the solution of the block copolymer, the hindered phenol antioxidant, the aqueous medium, and the coupling agent are mixed to obtain the mixture before the emulsifying. The inclusion of a coupling agent in the mixture that is to be emulsified can increase the particle stability of the particulate polymer formed of the graft polymer.

The presently disclosed method of producing a binder composition for a non-aqueous secondary battery electrode preferably further comprises a step of adding a coupling agent to an emulsion containing the core particles between the step of obtaining the core particles and the step of obtaining the particulate polymer. The addition of a coupling agent to the emulsion containing the core particles can increase the particle stability of the particulate polymer formed of the graft polymer.

### (Advantageous Effect)

Through the presently disclosed binder composition for a non-aqueous secondary battery electrode and slurry composition for a non-aqueous secondary battery electrode, it is possible to form an electrode having excellent peel strength and a secondary battery having excellent cycle characteristics.

Moreover, the presently disclosed electrode for a non-aqueous secondary battery has excellent peel strength and can form a secondary battery having excellent cycle characteristics.

Furthermore, according to the present disclosure, a non-aqueous secondary battery having excellent cycle characteristics is obtained.

### DETAILED DESCRIPTION

The following provides a detailed description of embodiments of the present disclosure.

The presently disclosed binder composition for a non-aqueous secondary battery electrode can be used in production of the presently disclosed slurry composition for a non-aqueous secondary battery electrode and can be produced, for example, using the presently disclosed method of producing a binder composition for a non-aqueous secondary battery electrode. A slurry composition for a non-aqueous secondary battery electrode that is produced using the presently disclosed binder composition for a non-aqueous secondary battery electrode can be used in production of an electrode of a non-aqueous secondary battery such as a lithium ion secondary battery. A feature of the presently disclosed non-aqueous secondary battery is that it includes the presently disclosed electrode for a non-aqueous secondary battery formed using the presently disclosed slurry composition for a non-aqueous secondary battery electrode.

Note that the presently disclosed binder composition for a non-aqueous secondary battery electrode, slurry composition for a non-aqueous secondary battery electrode, and electrode for a non-aqueous secondary battery are preferably used for a negative electrode, and the presently disclosed non-aqueous secondary battery is preferably a battery in which the presently disclosed electrode for a non-aqueous secondary battery is used as a negative electrode.

### (Binder composition for non-aqueous secondary battery electrode)

The presently disclosed binder composition for a non-aqueous secondary battery electrode contains a particulate polymer and a hindered phenol antioxidant, and may optionally further contain one or more selected from the group consisting of a phosphite antioxidant, a metal trapping agent, and other components that can be compounded in binder compositions (for example, a particulate binder). Moreover, the presently disclosed binder composition for a non-aqueous secondary battery electrode normally further contains a dispersion medium such as water.

The presently disclosed binder composition can form an electrode having excellent peel strength and a secondary battery having excellent cycle characteristics as a result of containing the hindered phenol antioxidant and as a result of the particulate polymer being formed of a graft polymer obtained through a graft polymerization reaction of not less than 1 part by mass and not more than 40 parts by mass, in total, of a hydrophilic monomer and/or a macromonomer with 100 parts by mass of core particles containing a block copolymer that includes an aromatic vinyl block region formed of an aromatic vinyl monomer unit and an isoprene block region formed of an isoprene unit, and in which the proportional content of the isoprene block region is not less than 70 mass% and not more than 99 mass%.

### <Particulate polymer>

The particulate polymer is a component that functions as a binder and holds components such as an electrode active material contained in an electrode mixed material layer formed using a slurry composition containing the binder composition so that these components do not become detached from the electrode mixed material layer.

The particulate polymer is water-insoluble particles formed from a specific graft polymer. When particles of a polymer are referred to as "water-insoluble" in the present disclosure, this means that when 0.5 g of the polymer is dissolved in 100 g of water at a temperature of 25°C, insoluble content is 90 mass% or more.

### [Graft polymer]

The graft polymer forming the particulate polymer is obtained by performing a graft polymerization reaction of not less than 1 part by mass and not more than 40 parts by mass, in total, of a hydrophilic monomer and/or a macromonomer with 100 parts by mass of core particles containing a block copolymer that includes an aromatic vinyl block region formed of an aromatic vinyl monomer unit and an isoprene block region formed of an isoprene unit, and in which proportional content of the isoprene block region is not less than 70 mass% and not more than 99 mass%. This graft polymerization reaction provides the core particles with a hydrophilic graft chain.

### {Core particles}

The block copolymer forming the core particles includes an aromatic vinyl block region formed of an aromatic vinyl monomer unit and an isoprene block region formed of an isoprene unit, and may optionally further include a macromolecule chain section in which repeating units other than an aromatic vinyl monomer unit and an isoprene unit are linked (hereinafter, also referred to simply as the "other region"). The proportional content of the isoprene block region in the block copolymer is required to be not less than 70 mass% and not more than 99 mass%. The core particles may contain one or more selected from the group consisting of a hindered phenol antioxidant, a phosphite antioxidant, and a metal trapping agent described in detail further below.

Note that the block copolymer may include just one aromatic vinyl block region or may include a plurality of aromatic vinyl block regions. Likewise, the block copolymer may include just one isoprene block region or may include a plurality of isoprene block regions. Moreover, the block copolymer may include just one other region or may include a plurality of other regions. Note that it is preferable that the block copolymer only includes the aromatic vinyl block region and the isoprene block region.

### -Aromatic vinyl block region-

The aromatic vinyl block region is a region that only includes an aromatic vinyl monomer unit as a repeating unit as previously described.

A single aromatic vinyl block region may be formed of just one type of aromatic vinyl monomer unit or may be formed of a plurality of types of aromatic vinyl monomer units, but is preferably formed of just one type of aromatic vinyl monomer unit.

Moreover, a single aromatic vinyl block region may include a coupling moiety (i.e., aromatic vinyl monomer units forming a single aromatic vinyl block region may be linked to one another with a coupling moiety interposed therebetween).

In a case in which the polymer includes a plurality of aromatic vinyl block regions, the types and proportions of aromatic vinyl monomer units forming these aromatic vinyl block regions may be the same or different for each of the aromatic vinyl block regions, but are preferably the same.

Examples of aromatic vinyl monomers that can form an aromatic vinyl monomer unit of the aromatic vinyl block region include aromatic monovinyl compounds such as styrene, styrene sulfonic acid and salts thereof, α-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers may be used individually or two or more of these aromatic vinyl monomers may be used in combination, it is preferable that one of these aromatic vinyl monomers is used individually.

The proportion constituted by the aromatic vinyl monomer unit in the block copolymer when the amount of all repeating units (monomer units and structural units) in the block copolymer is taken to be 100 mass% is preferably 1 mass% or more, more preferably 10 mass% or more, and even more preferably 15 mass% or more, and is preferably 30 mass% or less, and more preferably 25 mass% or less. When the proportion constituted by the aromatic vinyl monomer unit in the block copolymer is not less than any of the lower limits set forth above, cycle characteristics of a secondary battery can be further improved. On the other hand, when the proportion constituted by the aromatic vinyl monomer unit in the block copolymer is 30 mass% or less, flexibility of the graft polymer obtained using the block copolymer can be ensured, and peel strength of an electrode can be further improved.

Note that the proportion constituted by the aromatic vinyl monomer unit in the block copolymer is normally the same as the proportion constituted by the aromatic vinyl block region in the block copolymer.

### -Isoprene block region-

The isoprene block region is a region including an isoprene unit as a repeating unit.

Moreover, the isoprene block region may include a coupling moiety (i.e., isoprene units forming a single isoprene block region may be linked to one another with a coupling moiety interposed therebetween).

Furthermore, the isoprene block region may have a cross-linked structure (i.e., the isoprene block region may include a structural unit obtained through cross-linking of an isoprene unit).

Moreover, an isoprene unit included in the isoprene block region may be hydrogenated (i.e., the isoprene block region may include a structural unit obtained through hydrogenation of an isoprene unit (hydrogenated isoprene unit)).

A structural unit obtained through cross-linking of an isoprene unit can be introduced into the block copolymer through cross-linking of a polymer including an aromatic vinyl block region and an isoprene block region.

The cross-linking can be performed without any specific limitations using a radical initiator such as a redox initiator that is a combination of an oxidizing agent and a reducing agent, for example. Examples of oxidizing agents that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reducing agents that can be used include compounds including a metal ion in a reduced state such as ferrous sulfate and copper naphthenate; sulfonic acid compounds such as sodium methanesulfonate; and amine compounds such as dimethylaniline. One of these organic peroxides and reducing agents may be used individually, or two or more of these organic peroxides and reducing agents may be used in combination.

Also note that the cross-linking may be carried out in the presence of a cross-linker such as a polyvinyl compound (divinylbenzene, etc.), a polyallyl compound (diallyl phthalate, triallyl trimellitate, diethylene glycol bis(allyl carbonate), etc.), or a glycol (ethylene glycol diacrylate, etc.). Moreover, the cross-linking can be performed by irradiation with active energy rays such as γ-rays.

No specific limitations are placed on the method by which a hydrogenated isoprene unit is introduced into the block copolymer. For example, a method in which a polymer including an aromatic vinyl block region and an isoprene block region is hydrogenated to convert an isoprene unit to a hydrogenated isoprene unit and obtain the block copolymer is preferable because the block copolymer is easy to produce.

The total amount of an isoprene unit, a structural unit obtained through cross-linking of an isoprene unit, and a hydrogenated isoprene unit in the block copolymer when the amount of all repeating units (monomer units and structural units) in the block copolymer is taken to be 100 mass% is required to be not less than 70 mass% and not more than 99 mass%, is preferably 75 mass% or more, and is preferably 90 mass% or less, and more preferably 85 mass% or less. When the total proportion constituted by an isoprene unit, a structural unit obtained through cross-linking of an isoprene unit, and a hydrogenated isoprene unit in the block copolymer is less than 70 mass%, peel strength of an electrode decreases. Moreover, when the total proportion constituted by an isoprene unit, a structural unit obtained through cross-linking of an isoprene unit, and a hydrogenated isoprene unit in the block copolymer is more than 99 mass%, cycle characteristics of a secondary battery deteriorate.

Note that the proportion constituted by an isoprene unit, a structural unit obtained through cross-linking of an isoprene unit, and a hydrogenated isoprene unit in the block copolymer is normally the same as the proportion constituted by the isoprene block region in the block copolymer.

### -Other region-

The other region is a region that only includes a repeating unit other than an aromatic vinyl monomer unit and an isoprene unit (hereinafter, also referred to simply as the "other repeating unit") as a repeating unit as previously described.

A single other region may be formed of one type of other repeating unit or may be formed of a plurality of types of other repeating units.

Moreover, a single other region may include a coupling moiety (i.e., other repeating units forming a single other region may be linked with a coupling moiety interposed therebetween).

In a case in which the polymer includes a plurality of other regions, the types and proportions of other repeating units forming these other regions may be the same or different for each of the other regions.

The other repeating unit may be a nitrile group-containing monomer unit such as an acrylonitrile unit or a methacrylonitrile unit; a (meth)acrylic acid ester monomer unit such as an acrylic acid alkyl ester unit or a methacrylic acid alkyl ester unit; an acidic group-containing monomer unit such as a carboxyl group-containing monomer unit, a sulfo group-containing monomer unit, or a phosphate group-containing monomer unit; an aliphatic conjugated diene monomer unit of an aliphatic conjugated diene monomer other than isoprene; a structural unit obtained through cross-linking of an aliphatic conjugated diene monomer unit of an aliphatic conjugated diene monomer other than isoprene; a structural unit obtained through hydrogenation of an aliphatic conjugated diene monomer unit of an aliphatic conjugated diene monomer other than isoprene; or the like, for example, without any specific limitations. In the present disclosure "(meth)acrylic acid" is used to indicate "acrylic acid" and/or "methacrylic acid".

### {Production method of core particles}

The core particles containing the block copolymer described above can be produced, for example, through a step of block polymerizing monomers such as the previously described aromatic vinyl monomer and isoprene in an organic solvent to obtain a solution of a block copolymer that includes an aromatic vinyl block region and an isoprene block region (block copolymer solution production step), and a step of adding water to the obtained solution of the block copolymer and performing emulsification to form particles of the block copolymer (emulsification step).

### -Block copolymer solution production step-

No specific limitations are placed on the method of block polymerization in the block copolymer solution production step. For example, the block copolymer can be produced by polymerizing a first monomer component, adding a second monomer component, differing from the first monomer component, to the resultant solution and performing polymerization thereof, and further repeating addition and polymerization of monomer components as necessary. The organic solvent used as the reaction solvent is not specifically limited and can be selected as appropriate depending on the types of monomers and so forth.

The block copolymer obtained through block polymerization as described above is preferably subjected to a coupling reaction using a coupling agent in advance of the subsequently described emulsification step. The coupling reaction can, for example, cause the terminals of diblock structures contained in the block copolymer to bond to one another through the coupling agent to thereby convert the diblock structures to a triblock structure (i.e., the diblock content can be reduced).

Examples of coupling agents that can be used in the coupling reaction include, without any specific limitations, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of these coupling agents, dichlorodimethylsilane is preferable. Note that through the coupling reaction using a coupling agent, a coupling moiety derived from the coupling agent is introduced into a macromolecule chain (for example, a triblock structure) of the block copolymer.

The block copolymer solution obtained after the block polymerization and the optional coupling reaction described above can be subjected to the subsequently described emulsification step as obtained, or can be subjected to the emulsification step after addition of one or more selected from the group consisting of a hindered phenol antioxidant, a phosphite antioxidant, and a metal trapping agent as necessary, and preferably after addition of each of a hindered phenol antioxidant, a phosphite antioxidant, and a metal trapping agent.

### -Emulsification step-

Although no specific limitations are placed on the method of emulsification in the emulsification step, a method involving emulsification of a mixture of an aqueous medium and the solution of the block copolymer obtained by the block copolymer solution production step described above is preferable, and a method involving emulsification of a preliminary mixture of the solution of the block copolymer and an aqueous solution of an emulsifier is preferable. The solution of the block copolymer may include one or more selected from the group consisting of a hindered phenol antioxidant, a phosphite antioxidant, and a metal trapping agent, and preferably each thereof, as previously described. Moreover, the mixture may contain a subsequently described coupling agent as described further below. The emulsification can be carried out, for example, using a known emulsifier and a known emulsifying and dispersing device. Specific examples of emulsifying and dispersing devices that can be used include, but are not specifically limited to, batch emulsifying and dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying and dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying and dispersing devices such as a Microfluidizer (product name; produced by Mizuho Industrial Co., Ltd.), a Nanomizer (product name; produced by Nanomizer Inc.), and an APV Gaulin (product name; produced by Gaulin); membrane emulsifying and dispersing devices such as a Membrane Emulsifier (product name; produced by Reica Co., Ltd.); vibratory emulsifying and dispersing devices such as a Vibro Mixer (product name; produced by Reica Co., Ltd.); and ultrasonic emulsifying and dispersing devices such as an Ultrasonic Homogenizer (product name; produced by Branson). The conditions (processing temperature, processing time, etc.) of the emulsifying operation performed using the emulsifying and dispersing device are not specifically limited and may be selected as appropriate so as to obtain a desired dispersion state.

A water dispersion of core particles containing the block copolymer can then be obtained by, for example, using a known method to remove organic solvent from the emulsion obtain after emulsification as necessary.

### {Hydrophilic graft chain}

The hydrophilic graft chain can be introduced into the block copolymer forming the core particles by graft polymerizing a hydrophilic monomer or a macromonomer with the block copolymer without any specific limitations.

The hydrophilic monomer may be a carboxyl group-containing monomer, a sulfo group-containing monomer, a phosphate group-containing monomer, a hydroxy group-containing monomer, a reactive emulsifier, or the like, without any specific limitations. Moreover, hydrophilic monomers other than carboxyl group-containing monomers, sulfo group-containing monomers, phosphate group-containing monomers, hydroxy group-containing monomers, and reactive emulsifiers can be used as the hydrophilic monomer.

Examples of carboxyl group-containing monomers that can be used include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

An acid anhydride that produces a carboxyl group through hydrolysis can also be used as a carboxyl group-containing monomer.

Furthermore, an ethylenically unsaturated polybasic carboxylic acid such as butene tricarboxylic acid, a partial ester of an ethylenically unsaturated polybasic carboxylic acid such as monobutyl fumarate or mono-2-hydroxypropyl maleate, or the like can be used as a carboxyl group-containing monomer.

Examples of sulfo group-containing monomers that can be used include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can be used include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

Examples of hydroxy group-containing monomers that can be used include acrylic acid esters that include a hydroxy group in a molecule thereof, such as 2-hydroxyethyl acrylate, and methacrylic acid esters that include a hydroxy group in a molecule thereof, such as 2-hydroxyethyl methacrylate.

Examples of reactive emulsifiers that can be used include polyalkylene oxide emulsifiers that include an anionic functional group and/or a non-ionic functional group. For example, sodium styrenesulfonate, sodium allyl alkyl sulfonate, alkyl allyl sulfosuccinate salts, polyoxyethylene alkyl allyl glycerin ether sulfate, polyoxyethylene alkylphenol allyl glycerin ether sulfate, and the like can be used.

Examples of other hydrophilic monomers that can be used include acrylamide, hydroxyethylacrylamide, vinyl acetate, methoxy polyethylene glycol acrylate, and tetrahydrofurfuryl acrylate.

One of the hydrophilic monomers described above may be used individually, or two or more of the hydrophilic monomers described above may be used in combination. The hydrophilic monomer is preferably an acidic group-containing monomer such as a carboxyl group-containing monomer, a sulfo group-containing monomer, or a phosphate group-containing monomer, more preferably vinyl sulfonic acid, methacrylic acid, itaconic acid, or acrylic acid, even more preferably methacrylic acid or acrylic acid, and particularly preferably methacrylic acid.

The amount of the hydrophilic graft chain introduced through graft polymerization of the hydrophilic monomer relative to 100 parts by mass of the particulate polymer is preferably 0.2 parts by mass or more, more preferably 0.8 parts by mass or more, and even more preferably 2.1 parts by mass or more, and is preferably 8.4 parts by mass or less, more preferably 7.4 parts by mass or less, and even more preferably 6.1 parts by mass or less.

The macromonomer may be a macromonomer of a polycarboxylic acid polymer, a macromonomer of a polyvinyl alcohol (PVA) polymer, a macromonomer of a polyethylene oxide (PEO) polymer, a macromonomer of a polyvinyl pyrrolidone (PVP) polymer, or the like. Of these macromonomers, a macromonomer of a polycarboxylic acid polymer is preferable.

The amount of the hydrophilic monomer and/or macromonomer that is reacted with the block copolymer per 100 parts by mass of the block copolymer is required to be not less than 1 part by mass and not more than 40 parts by mass, is preferably 2 parts by mass or more, and more preferably 5 parts by mass or more, and is preferably 35 parts by mass or less, and more preferably 25 parts by mass or less. When the amount reacted with the block copolymer by graft polymerization is outside of any of the ranges set forth above, peel strength of an electrode decreases and cycle characteristics of a secondary battery deteriorate.

### {Production method of graft polymer}

Graft polymerization of the hydrophilic graft chain can be carried out by a known graft polymerization method without any specific limitations. Specifically, the graft polymerization can be carried out using a radical initiator such as a redox initiator that is a combination of an oxidizing agent and a reducing agent. The oxidizing agent and the reducing agent can be any of the same oxidizing agents and reducing agents as previously described as oxidizing agents and reducing agents that can be used in cross-linking of a block polymer including a block region formed of an aromatic vinyl monomer unit and an isoprene block region.

In a case in which graft polymerization is performed with respect to the block copolymer including an aromatic vinyl block region and an isoprene block region using a redox initiator, cross-linking of isoprene units in the block copolymer may be performed during introduction of the hydrophilic graft chain by graft polymerization. Note that it is not essential that cross-linking proceeds concurrently to graft polymerization in production of the graft polymer, and the type of radical initiator and the reaction conditions may be adjusted such that only graft polymerization proceeds.

By carrying out a graft polymerization reaction of a hydrophilic monomer and/or a macromonomer in the specific proportion described above with the core particles containing the previously described block copolymer, a particulate polymer formed of a graft polymer can be obtained.

The graft polymerization reaction is preferably carried out in the presence of a coupling agent. Carrying out the graft polymerization reaction in the presence of a coupling agent can increase particle stability of the obtained particulate polymer. A graft polymer that is obtained by carrying out a graft polymerization reaction in the presence of a coupling agent normally includes a coupling moiety derived from the coupling agent in a hydrophilic graft chain thereof.

Examples of coupling agents that may be present in the reaction system during graft polymerization include, but are not specifically limited to, silane coupling agents, titanate coupling agents, and aluminate coupling agents.

Examples of silane coupling agents that can be used include, but are not specifically limited to, alkoxysilanes including a vinyl group such as vinyltriethoxysilane and vinyltris(2-methoxyethoxy)silane; alkoxysilanes including a methacryloyl group or an acryloyl group such as 3-acryloxypropyltrimethoxysilane and 3-methacryloxypropyltrimethoxysilane; alkoxysilanes including an epoxy group such as 3-glycidoxypropyltrimethoxysilane, 2-(3,4-epoxycyclohexyl)ethyltrimethoxysilane, and 3-glycidoxypropylmethyldiethoxysilane; alkoxysilanes including an amino group such as 3-aminopropyltriethoxysilane, 3-aminopropyltrimethoxysilane, N-2-(aminoethyl)-3-aminopropyltrimethoxysilane, and N-2-(aminoethyl)-3-aminopropylmethyldimethoxy silane; alkoxysilanes including a mercapto group such as 3-mercaptopropyltrimethoxysilane; alkoxysilanes including an isocyanate group such as 3-isocyanatopropyltriethoxysilane; and disilazanes such as hexamethyldisilazane, tetramethyldisilazane, divinyltetramethyldisilazane, hexamethylcyclotrisilazane, and octamethylcyclotetrasilazane.

Examples of titanate coupling agents that can be used include, but are not specifically limited to, isopropyl trioctanoyl titanate, isopropyl dimethacryl isostearoyl titanate, isopropyl tristearoyl titanate, isopropyl triisostearoyl titanate, isopropyl diacryl titanate, dicumyl phenyloxy acetate titanate, diisostearoyl ethylene titanate, and bis(dioctylpyrophosphate)oxyacetate titanate. Examples of titanate coupling agents that are available as commercial products include KRTTS, KR36B, KR55, KR41B, KR38S, KR138S, KR238S, 338X, KR44, and KR9SA (all produced by Ajinomoto Fine-Techno Co., Ltd.; product name: PLENACT® (PLENACT is a registered trademark in Japan, other countries, or both)).

Examples of aluminate coupling agents that can be used include alkoxyaluminums such as trimethoxyaluminum, triethoxyaluminum, tripropoxyaluminum, triisopropoxyaluminum, tributoxyaluminum, acetoalkoxy aluminum diisopropylate (commercially available as PLENACT AL-M produced by Ajinomoto Fine-Techno Co., Ltd.).

Of these examples, a coupling agent including a carboxyl group, a coupling agent including a glycidyl group, or a coupling agent that produces a hydroxy group through hydrolysis is preferable for further improving particle stability.

Note that the coupling agent described above may be present in the reaction system during graft polymerization as a result of being compounded with the mixture that is emulsified in the previously described emulsification step or may be present in the reaction system during graft polymerization as a result of being compounded with the emulsion containing core particles that is obtained through emulsification of the mixture in the previously described emulsification step.

In a case in which a coupling agent is to be contained in the mixture, it is preferable that the coupling agent is mixed with a solution of the block copolymer prior to mixing the solution of the block copolymer and an aqueous medium, more preferable that the coupling agent is mixed with a solution of the block copolymer containing one or more selected from the group consisting of a hindered phenol antioxidant, a phosphite antioxidant, and a metal trapping agent prior to mixing with an aqueous medium, and even more preferable that the coupling agent is mixed with a solution of the block copolymer containing each of a hindered phenol antioxidant, a phosphite antioxidant, and a metal trapping agent.

The amount of the coupling agent that is added per 100 parts by mass of the previously described block copolymer is preferably 0.01 parts by mass or more, more preferably 0.05 parts by mass or more, and even more preferably 0.1 parts by mass or more, and is preferably 1.0 parts by mass or less, more preferably 0.5 parts by mass or less, and even more preferably 0.2 parts by mass or less.

### [Surface acid content]

In a case in which the hydrophilic graft chain provided as described above includes an acidic group (i.e., in a case in which the hydrophilic graft chain is provided using an acidic group-containing monomer or a macromonomer including an acidic group), the surface acid content of the particulate polymer is preferably 0.02 mmol/g or more, more preferably 0.04 mmol/g or more, and even more preferably 0.10 mmol/g or more, and is preferably 1.0 mmol/g or less, more preferably 0.90 mmol/g or less, and even more preferably 0.70 mmol/g or less. When the surface acid content of the particulate polymer is within any of the ranges set forth above, peel strength of an electrode and cycle characteristics of a secondary battery can be further improved.

### [Median diameter]

The median diameter of the particulate polymer is preferably not less than 0.6 µm and not more than 2.5 µm. When the median diameter of the particulate polymer is within the range set forth above, peel strength of an electrode and cycle characteristics of a secondary battery can be further improved.

### <Hindered phenol antioxidant>

The hindered phenol antioxidant contained in the binder composition is not specifically limited and may be 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], 2,4,6-tris(3',5'-di-tert-butyl-4'-hydroxybenzyl)mesitylene, or the like, for example. Of these hindered phenol antioxidants, 4-[[4,6-bis(octylthio)-1,3,5-triazin-2-yl]amino]-2,6-di-tert-butylphenol and 2,6-di-tert-butyl-p-cresol are preferable from a viewpoint of inhibiting electrode swelling associated with repeated charging and discharging, and 4-[[4,6-bis(octylthio)-1,3,5-triazin-2-yl]amino]-2,6-di-tert-butylphenol is more preferable from a viewpoint of inhibiting swelling associated with repeated charging and discharging while also improving electrode peel strength.

One of these hindered phenol antioxidants may be used individually, or two or more of these hindered phenol antioxidants may be used in combination.

The amount of the hindered phenol antioxidant per 100 parts by mass, in total, of the particulate polymer and a particulate binder that is an optional component is preferably 0.01 parts by mass or more, more preferably 0.02 parts by mass or more, and even more preferably 0.03 parts by mass or more, and is preferably 1.0 parts by mass or less, more preferably 0.50 parts by mass or less, and even more preferably 0.30 parts by mass or less. When the content of the hindered phenol antioxidant is not less than any of the lower limits set forth above, peel strength of an electrode and cycle characteristics of a secondary battery can be further improved, and electrode swelling associated with repeated charging and discharging can be inhibited. Moreover, when the content of the hindered phenol antioxidant is not more than any of the upper limits set forth above, peel strength of an electrode and cycle characteristics of a secondary battery can be further improved.

### <Phosphite antioxidant>

The phosphite antioxidant that can optionally be contained in the binder composition is not specifically limited and may be 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphasp iro[5.5]undecane, 2,2-methylenebis(4,6-di-t-butylphenyl) 2-ethylhexyl phosphite, tris(2,4-di-tert-butylphenyl) phosphite, or the like, for example. Of these phosphite antioxidants, 3,9-bis(octadecyloxy)-2,4,8,10-tetraoxa-3,9-diphosphaspiro[5.5]undecane and tris(2,4-di-tert-butylphenyl) phosphite are preferable from a viewpoint of inhibiting electrode swelling associated with repeated charging and discharging, and 3,9-bis(octadecyloxy)-2,4,8,10-tetraoxa-3,9-diphosphaspiro[5.5]undecane is more preferable from a viewpoint of inhibiting electrode swelling associated with repeated charging and discharging while also improving electrode peel strength.

One of these phosphite antioxidants may be used individually, or two or more of these phosphite antioxidants may be used in combination.

The amount of the phosphite antioxidant per 100 parts by mass, in total, of the particulate polymer and a particulate binder that is an optional component is preferably 0.01 parts by mass or more, more preferably 0.05 parts by mass or more, and even more preferably 0.08 parts by mass or more, and is preferably 0.40 parts by mass or less, more preferably 0.30 parts by mass or less, and even more preferably 0.20 parts by mass or less. When the content of the phosphite antioxidant is not less than any of the lower limits set forth above, peel strength of an electrode and cycle characteristics of a secondary battery can be further improved. Moreover, when the content of the phosphite antioxidant is not more than any of the upper limits set forth above, peel strength of an electrode and cycle characteristics of a secondary battery can be further improved, and electrode swelling associated with repeated charging and discharging can be inhibited.

Note that in a case in which the binder composition contains the phosphite antioxidant, a ratio of the content of the hindered phenol antioxidant relative to the content of the phosphite antioxidant (hindered phenol antioxidant/phosphite antioxidant) is preferably 0.05 or more, and more preferably 0.2 or more, and is preferably 5 or less, and more preferably 3 or less. When the ratio of the content of the hindered phenol antioxidant relative to the content of the phosphite antioxidant is not less than any of the lower limits set forth above, peel strength of an electrode and cycle characteristics of a secondary battery can be further improved, and electrode swelling associated with repeated charging and discharging can be inhibited. Moreover, when the ratio of the content of the hindered phenol antioxidant relative to the content of the phosphite antioxidant is not more than any of the upper limits set forth above, peel strength of an electrode and cycle characteristics of a secondary battery can be further improved.

### <Metal trapping agent>

The metal trapping agent that can optionally be contained in the binder composition may be a chelating compound, for example, without any specific limitations. The chelating compound is not specifically limited but can preferably be a compound selected from the group consisting of an aminocarboxylic acid chelating compound, a phosphonic acid chelating compound, gluconic acid, citric acid, malic acid, and tartaric acid. Of these examples, a chelating compound that can selectively trap transition metal ions without trapping ions that contribute to electrochemical reactions is preferable, and aminocarboxylic acid chelating compounds and phosphonic acid chelating compounds are particularly preferable.

Examples of aminocarboxylic acid chelating compounds include ethylenediaminetetraacetic acid (EDTA), nitrilotriacetic acid (NTA), trans-1,2-diaminocyclohexanetetraacetic acid (CyDTA), diethylenetriaminepentaacetic acid (DTPA), bis(aminoethyl) glycol ether N,N,N',N'-tetraacetic acid (EGTA), N-(2-hydroxyethyl)ethylenediamine-N,N',N'-triacetic acid (HEDTA), and dihydroxyethylglycine (DHEG).

Examples of phosphonic acid chelating compounds include 1-hydroxyethane-1,1-diphosphonic acid (HEDP).

Of the chelating compounds described above, EDTA and CyDTA are preferable from a viewpoint of inhibiting electrode swelling associated with repeated charging and discharging, and EDTA is more preferable from a viewpoint of inhibiting electrode swelling associated with repeated charging and discharging while also improving electrode peel strength.

One of these chelating compounds may be used individually, or two or more of these chelating compounds may be used in combination.

The amount of the metal trapping agent per 100 parts by mass, in total, of the particulate polymer and a particulate binder that is an optional component is preferably 0.01 parts by mass or more, more preferably 0.02 parts by mass or more, and even more preferably 0.03 parts by mass or more, and is preferably 0.5 parts by mass or less, more preferably 0.4 parts by mass or less, and even more preferably 0.3 parts by mass or less. When the content of the metal trapping agent is not less than any of the lower limits set forth above, peel strength of an electrode and cycle characteristics of a secondary battery can be further improved, and electrode swelling associated with repeated charging and discharging can be inhibited. Moreover, when the content of the metal trapping agent is not more than any of the upper limits set forth above, peel strength of an electrode and cycle characteristics of a secondary battery can be further improved.

Note that in a case in which the binder composition contains the phosphite antioxidant and the metal trapping agent, a ratio of the content of the metal trapping agent relative to the total content of the hindered phenol antioxidant and the phosphite antioxidant (metal trapping agent/hindered phenol antioxidant + phosphite antioxidant) is preferably 0.05 or more, and more preferably 0.1 or more, and is preferably 1 or less, and more preferably 0.8 or less. When the ratio of the content of the metal trapping agent relative to the total content of the hindered phenol antioxidant and the phosphite antioxidant is not less than any of the lower limits set forth above, peel strength of an electrode and cycle characteristics of a secondary battery can be further improved, and electrode swelling associated with repeated charging and discharging can be inhibited. Moreover, when the ratio of the content of the metal trapping agent relative to the total content of the hindered phenol antioxidant and the phosphite antioxidant is not more than any of the upper limits set forth above, peel strength of an electrode and cycle characteristics of a secondary battery can be further improved.

### <Aqueous medium>

The aqueous medium contained in the presently disclosed binder composition is not specifically limited so long as it includes water and may be an aqueous solution or a mixed solution of water and a small amount of an organic solvent.

### <Other components>

The presently disclosed binder composition can contain components other than those described above (i.e., other components). For example, the binder composition may contain a known particulate binder (for example, a styrene-butadiene copolymer and/or acrylic polymer) other than the particulate polymer described above.

The median diameter of the particulate binder is preferably not less than 0.01 µm and not more than 0.5 µm, is more preferably 0.05 µm or more, and even more preferably 0.1 µm or more, and is more preferably 0.4 µm or less, and even more preferably 0.3 µm or less. When the median diameter of the particulate binder is not less than any of the lower limits set forth above, peel strength of an electrode can be further increased. Moreover, when the median diameter of the particulate binder is not more than any of the upper limits set forth above, cycle characteristics of a secondary battery can be improved. The "median diameter of a particulate binder" referred to in the present disclosure can be measured by a method described in the EXAMPLES section of the present specification.

In a case in which the binder composition contains a particulate binder, the content of the previously described particulate polymer is preferably 50 mass% or more, more preferably 55 mass% or more, and even more preferably 60 mass% or more of the total content of the particulate polymer and the particulate binder, and is preferably 90 mass% or less, more preferably 85 mass% or less, and even more preferably 80 mass% or less of the total content of the particulate polymer and the particulate binder. When the content of the particulate polymer is not less than any of the lower limits set forth above, peel strength of an electrode produced using the binder composition can be further improved. Moreover, when the content of the particulate polymer is not more than any of the upper limits set forth above, cycle characteristics of a secondary battery formed using the binder composition can be further improved.

The binder composition may also contain a water-soluble polymer. The water-soluble polymer is a component that can cause good dispersion of compounded components such as the previously described particulate polymer in the aqueous medium, and is preferably a synthetic macromolecule, and more preferably an addition polymer produced through addition polymerization, but is not specifically limited thereto. Also note that the water-soluble polymer may be in the form of a salt (salt of a water-soluble polymer). In other words, the term "water-soluble polymer" as used in the present disclosure is inclusive of a salt of the water-soluble polymer. When a polymer is referred to as "water-soluble" in the present disclosure, this means that when 0.5 g of the polymer is dissolved in 100 g of water at a temperature of 25°C, insoluble content is less than 1.0 mass%.

The binder composition may further contain known additives. Examples of such known additives include antioxidants such as 2,6-di-tert-butyl-p-cresol, defoamers, and dispersants (excluding those corresponding to the aforementioned water-soluble polymer).

One other component may be used individually, or two or more other components may be used in combination in a freely selected ratio.

### <Production method of binder composition>

The presently disclosed binder composition can be produced by, without any specific limitations, mixing the particulate polymer, the hindered phenol antioxidant, optionally used other components, and so forth in the presence of the aqueous medium.

Moreover, the presently disclosed binder composition can be produced by emulsifying a mixture containing a hindered phenol antioxidant, an aqueous medium, and a solution of the previously described block copolymer, and optionally further containing a phosphite antioxidant and/or metal trapping agent, and then optionally removing organic solvent to obtain a water dispersion of core particles, subsequently providing the core particles with a hydrophilic graft chain to obtain a water dispersion of a particulate polymer formed of a graft polymer, and optionally adding other components to the water dispersion and mixing them therewith. Furthermore, the presently disclosed binder composition can be produced by emulsifying a mixture containing a hindered phenol antioxidant, an aqueous medium, a coupling agent, and a solution of the previously described block copolymer, and optionally further containing a phosphite antioxidant and/or metal trapping agent, and then optionally removing organic solvent to obtain a water dispersion of core particles, subsequently providing the core particles with a hydrophilic graft chain to obtain a water dispersion of a particulate polymer formed of a graft polymer, and optionally adding other components to the water dispersion and mixing them therewith. Also, the presently disclosed binder composition can be produced by emulsifying a mixture containing a hindered phenol antioxidant, an aqueous medium, and a solution of the previously described block copolymer, and optionally further containing a phosphite antioxidant and/or metal trapping agent, and then optionally removing organic solvent to obtain a water dispersion (emulsion) of core particles, subsequently adding a coupling agent and then providing the core particles with a hydrophilic graft chain to obtain a water dispersion of a particulate polymer formed of a graft polymer, and optionally adding other components to the water dispersion and mixing them therewith. By including a hindered phenol antioxidant and the like in the mixture and then emulsifying the mixture in this manner, it is possible to easily obtain a binder composition for a non-aqueous secondary battery electrode in which the hindered phenol antioxidant and the like are well contained.

Note that in a case in which the binder composition is produced using a dispersion liquid of a particulate polymer and/or an aqueous solution of a water-soluble polymer, liquid content of the dispersion liquid and/or aqueous solution may be used as the aqueous medium of the binder composition.

### (Slurry composition for non-aqueous secondary battery electrode)

The presently disclosed slurry composition is a composition that is used for forming an electrode mixed material layer of an electrode, that contains the binder composition set forth above, and that further contains an electrode active material. In other words, the presently disclosed slurry composition contains the previously described particulate polymer, a hindered phenol antioxidant, an electrode active material, and an aqueous medium, and optionally further contains one or more selected from the group consisting of a phosphite antioxidant, a metal trapping agent, and other components. An electrode that includes an electrode mixed material layer formed from the presently disclosed slurry composition has excellent peel strength as a result of the slurry composition containing the binder composition set forth above. Moreover, a secondary battery that includes the aforementioned electrode can display excellent cycle characteristics.

### <Binder composition>

The presently disclosed binder composition set forth above, which contains a particulate polymer formed of a specific graft polymer and a hindered phenol antioxidant, is used as the binder composition.

Note that no specific limitations are placed on the amount of the binder composition in the slurry composition. For example, the amount of the binder composition can be set as an amount such that the amount of the particulate polymer, in terms of solid content, is not less than 0.5 parts by mass and not more than 15 parts by mass per 100 parts by mass of the electrode active material.

### <Electrode active material>

Known electrode active materials that are used in secondary batteries can be used without any specific limitations as the electrode active material. Specifically, examples of electrode active materials that can be used in an electrode mixed material layer of a lithium ion secondary battery, which is one example of a secondary battery, include the electrode active materials described below, but are not specifically limited thereto.

The tap density of the electrode active material is preferably 0.7 g/cm³ or more, more preferably 0.75 g/cm³ or more, and even more preferably 0.8 g/cm³ or more, and is preferably 1.1 g/cm³ or less, more preferably 1.05 g/cm³ or less, and even more preferably 1.03 g/cm³ or less. The tap density referred to in the present disclosure can be measured by a method described in the EXAMPLES section of the present specification.

### [Positive electrode active material]

Examples of positive electrode active materials that can be compounded in a positive electrode mixed material layer of a positive electrode in a lithium ion secondary battery include transition metal-containing compounds such as transition metal oxides, transition metal sulfides, and complex metal oxides of lithium and transition metals. Examples of transition metals include Ti, V, Cr, Mn, Fe, Co, Ni, Cu, and Mo.

Specific examples of positive electrode active materials include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), lithium-rich spinel compounds represented by Li₁₊ₓMn₂₋ₓO4 (0 < x < 2), Li[Ni_{0.17}Li_{0.2}Co_{0.07}Mn_{0.56}]O₂, and LiNi_{0.5}Mn_{1.5}O₄.

One of the positive electrode active materials described above may be used individually, or two or more of the positive electrode active materials described above may be used in combination.

### [Negative electrode active material]

Examples of negative electrode active materials that can be compounded in a negative electrode mixed material layer of a negative electrode in a lithium ion secondary battery include carbon-based negative electrode active materials, metal-based negative electrode active materials, and negative electrode active materials that are a combination thereof.

Herein, "carbon-based negative electrode active material" refers to an active material having a main framework of carbon into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, oxides such as lithium titanate can be used.

One of the negative electrode active materials described above may be used individually, or two or more of the negative electrode active materials described above may be used in combination.

### <Other components>

Examples of other components that can be compounded in the slurry composition include, but are not specifically limited to, conductive materials and the same other components as can be compounded in the presently disclosed binder composition. One other component may be used individually, or two or more other components may be used in combination in a freely selected ratio.

### <Production of slurry composition>

No specific limitations are placed on the method by which the slurry composition is produced.

For example, the slurry composition can be produced by mixing the binder composition, the electrode active material, and other components that are used as necessary in the presence of an aqueous medium.

Note that the aqueous medium used in production of the slurry composition includes the aqueous medium that was contained in the binder composition. No specific limitations are placed on the method of mixing, and mixing may be performed by a stirrer or disperser such as can typically be used.

### (Electrode for non-aqueous secondary battery)

The presently disclosed electrode for a non-aqueous secondary battery includes an electrode mixed material layer formed using the slurry composition for a non-aqueous secondary battery electrode set forth above. Consequently, the electrode mixed material layer is formed of a dried product of the slurry composition set forth above, normally contains an electrode active material, a component derived from a particulate polymer, and a hindered phenol antioxidant, and optionally further contains one or more selected from the group consisting of a phosphite antioxidant, a metal trapping agent, and other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Although the particulate polymer is present in a particulate form in the slurry composition, the particulate polymer may be in a particulate form or in any other form in the electrode mixed material layer formed using the slurry composition.

The presently disclosed electrode for a non-aqueous secondary battery has excellent peel strength as a result of the electrode mixed material layer being formed using the slurry composition for a non-aqueous secondary battery electrode set forth above. Moreover, a secondary battery that includes the electrode can display excellent cycle characteristics.

### <Production of electrode for non-aqueous secondary battery>

The electrode mixed material layer of the presently disclosed electrode for a non-aqueous secondary battery can be produced by any of the methods described below, for example.
(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate, the slurry composition is dried to produce an electrode mixed material layer, and then the obtained electrode mixed material layer is transferred onto the surface of a current collector

Of these methods, method (1) is particularly preferable because it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may be made of, for example, iron, copper, aluminum, nickel, stainless steel, titanium, tantalum, gold, or platinum. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector and also enables further densification of the obtained electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed non-aqueous secondary battery includes a positive electrode, a negative electrode, an electrolyte solution, and a separator, and has the electrode for a non-aqueous secondary battery set forth above used as at least one of the positive electrode and the negative electrode. The presently disclosed non-aqueous secondary battery can display excellent cycle characteristics as a result of being produced by using the electrode for a non-aqueous secondary battery set forth above as at least one of the positive electrode and the negative electrode.

Although the following describes an example in which the secondary battery is a lithium ion secondary battery, the presently disclosed secondary battery is not limited to the following example.

### <Electrodes>

Examples of electrodes other than the presently disclosed electrode for a non-aqueous secondary battery set forth above that can be used in the presently disclosed non-aqueous secondary battery include known electrodes that are used in production of secondary batteries without any specific limitations. Specifically, an electrode obtained by forming an electrode mixed material layer on a current collector by a known production method can be used as an electrode other than the presently disclosed electrode for a non-aqueous secondary battery set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferred as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Separator>

The separator may be a separator such as described in JP2012-204303A, for example, but is not specifically limited thereto. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate as necessary in accordance with the battery shape to place the laminate in a battery container, injecting the electrolyte solution into the battery container, and sealing the battery container. The electrode for a non-aqueous secondary battery set forth above is used as at least one of the positive electrode and the negative electrode in the presently disclosed non-aqueous secondary battery, and preferably as the negative electrode. An overcurrent preventing device such as a fuse or a PTC device; an expanded metal; or a lead plate may be provided in the presently disclosed non-aqueous secondary battery as necessary in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the proportional content of a styrene block region and an isoprene block region in a polymer; the median diameter, surface acid content, proportion of an acidic group-containing hydrophilic graft chain, and particle stability of a particulate polymer; the median diameter of a particulate binder; the amount of an antioxidant and the amount of a metal trapping agent in a binder composition; the tap density of an electrode active material; the peel strength and swelling resistance of an electrode; and the cycle characteristics of a secondary battery.

### <Proportional content of styrene block region and isoprene block region>

The intensity ratio of a peak attributed to styrene units and a peak attributed to isoprene units was determined by NMR (nuclear magnetic resonance absorption), and the calculated ratio was converted to a mass ratio.

### <Median diameter of particulate polymer>

Measurement was performed using a laser diffraction particle diameter distribution analyzer (produced by Shimadzu Corporation; product name: SALD-2300). Specifically, a water dispersion of a particulate polymer was prepared, a particle size distribution (by volume) was measured using the aforementioned apparatus, and the particle diameter at which cumulative volume calculated from the small diameter end of the distribution reached 50% was determined as the median diameter (µm).

### <Median diameter of particulate binder>

Measurement was performed using a laser diffraction particle diameter distribution analyzer (produced by Beckman Coulter, Inc.; product name: LS-230). Specifically, a water dispersion adjusted to a solid content concentration of 0.1% was prepared using a particulate binder, a particle size distribution (by volume) was measured using the aforementioned apparatus, and the particle diameter at which cumulative volume calculated from the small diameter end of the distribution reached 50% was determined as the median diameter (µm).

### <Surface acid content of particulate polymer>

An obtained water dispersion of a particulate polymer was diluted with 0.3% dodecylbenzenesulfonic acid aqueous solution and was adjusted to a solid content concentration of 10%. Thereafter, centrifugal separation was performed for 30 minutes at 7,000 G to collect light liquid. The obtained light liquid was adjusted to pH 12.0 with 5% sodium hydroxide aqueous solution. The pH adjusted sample, in an amount of 3.0 g in terms of solid content, was collected in a 100 mL beaker, and then 3 g of an aqueous solution of EMULGEN 120 (produced by Kao Corporation) diluted to 0.2% and 1 g of an aqueous solution of SM5512 (produced by Dow Corning Toray Co., Ltd.) diluted to 1% were added thereto. These materials were uniformly stirred by a stirrer while 0.1 N hydrochloric acid aqueous solution was added thereto at a rate of 0.5 mL/30 s and while electrical conductivity was measured at intervals of 30 seconds.

The obtained electrical conductivity data was plotted as a graph with electrical conductivity on a vertical axis (Y coordinate axis) and cumulative amount of added hydrochloric acid on a horizontal axis (X coordinate axis). In this manner, a hydrochloric acid amount-electrical conductivity curve with three inflection points was obtained. The X coordinates of the three inflection points were taken to be PI, P2, and P3 in order from the smallest value. Linear approximations L1, L2, and L3 were determined by the least squares method for data in three sections corresponding to X coordinates of: zero to coordinate PI; coordinate P1 to coordinate P2; and coordinate P2 to coordinate P3. An X coordinate of an intersection point of the linear approximation L1 and the linear approximation L2 was taken to be A1, and an X coordinate of an intersection point of the linear approximation L2 and the linear approximation L3 was taken to be A2.

The surface acid content per 1 g of the particulate polymer was determined as a hydrochloric acid-equivalent value (mmol/g) from the following formula (a).

### (a) Surface acid content per 1 g of particulate polymer = (A2 - A1)/3.0 g <Proportion of acidic group-containing hydrophilic graft chain>

The sample remaining after measurement of electrical conductivity in "Surface acid content of particulate polymer" described above (aqueous solution of pH 5 to 7) was extracted with ethyl ether, and the extract was dried with a desiccant. The molar content ratio of an acidic group-containing monomer such as methacrylic acid, acrylic acid, or itaconic acid in the extract was determined by high-performance liquid chromatography and mass spectrometry.

A value obtained by multiplying the surface acid content (mmol/g) of the particulate polymer by the molar content ratio of the acidic group-containing monomer determined as described above and the molecular weight of the acidic group-containing monomer was converted to a value per 100 g of the particulate polymer to determine the proportion of an acidic group-containing hydrophilic graft chain.

### <Particle stability of particulate polymer>

The mechanical stability (MST) of an obtained water dispersion of a particulate polymer was measured in accordance with JIS K6381 by a Klaxon tester. The MST was evaluated by the following standard. A smaller MST value indicates higher particle stability.
A: MST of 0.025 s or less
B: MST of more than 0.025 s and not more than 0.035 s
C: MST of more than 0.035 s and not more than 0.050 s
D: MST of more than 0.050 s or not measurable

### <Amount of antioxidant in binder composition>

Saline water of 20% in concentration was added to 10 g of a produced binder composition under stirring to coagulate the dispersion into a powdered form. Approximately 2 g of the coagulated material was washed with 100 mL of water, was subsequently separated using a filter, and was dried under reduced pressure at 40°C for 2 hours.

Extraction was then performed by the Soxhlet extraction method at 90°C for 8 hours with toluene as a solvent to obtain an extract. The obtained extract was vacuum dried at 40°C for 2 hours, and then 5 mL of tetrahydrofuran was added to dissolve the extract. After sampling 1 mL of the resultant solution into a 10 mL volumetric flask, the volumetric flask was filled up to 10 mL with tetrahydrofuran to obtain a test solution. Components having a molecular weight of 100 to 1,500 were collected from the prepared test solution by high-performance liquid chromatography, and the types of hindered phenol antioxidant and phosphite antioxidant were identified by fast atom bombardment (FAB). The amount of each identified antioxidant was quantified through a calibration curve method by high-performance liquid chromatography.

### <Amount of metal trapping agent in binder composition>

After adjusting 10 g of a produced binder composition to pH 4 to 6, saline water of 20% in concentration was added under stirring to coagulate the dispersion. An aqueous solution obtained by removing coagulated material was extracted with ethyl ether.

The obtained extract was vacuum dried at 40°C for 2 hours, and then 5 mL of tetrahydrofuran was added to dissolve the extract. After sampling 1 mL of the resultant solution into a 10 mL volumetric flask, the volumetric flask was filled up to 10 mL with tetrahydrofuran to obtain a test solution. Components having a molecular weight of 100 to 1,500 were collected from the prepared test solution by high-performance liquid chromatography, and the type of metal trapping agent was identified by fast atom bombardment (FAB). The content of the metal trapping agent was quantified through a calibration curve method by high-performance liquid chromatography.

### <Tap density of electrode active material>

The tap density of an electrode active material was measured using a Powder Tester® (Powder Tester is a registered trademark in Japan, other countries, or both; PT-D produced by Hosokawa Micron Corporation). Specifically, a powder of the electrode active material that had been loaded into a measurement vessel was first levelled off at the top surface of the vessel. Next, a cap provided with the measurement device was attached to the measurement vessel and further electrode active material powder was added up to an upper edge of the attached cap. Tapping was then performed by repeatedly dropping the measurement vessel 180 times from a height of 1.8 cm. After this tapping, the cap was removed, and the electrode active material powder was once again levelled off at the upper surface of the vessel. The tapped and levelled sample was weighed, and the bulk density in this state was measured as the packed bulk density (i.e., the tap density (g/cm³)).

### <Peel strength of electrode>

A produced electrode was dried in a 100°C vacuum dryer for 1 hour and then a rectangle of 100 mm in length and 10 mm in width was cut out from the dried electrode as a test specimen. The test specimen was placed with the surface of the electrode mixed material layer facing downward and cellophane tape was affixed to the surface of the electrode mixed material layer. Tape prescribed by JIS Z1522 was used as the cellophane tape. The cellophane tape was secured to a test stage in advance. Thereafter, the stress when the current collector was peeled off by pulling one end of the current collector vertically upward at a pulling speed of 50 mm/min was measured. This measurement was made three times and an average value of the stress was determined. The average value was taken to be the peel strength and was evaluated by the following standard. A larger peel strength indicates larger binding force of the electrode mixed material layer to the current collector, and thus indicates larger close adherence strength.
A: Peel strength of 24 N/m or more
B: Peel strength of not less than 19 N/m and less than 24 N/m
C: Peel strength of not less than 14 N/m and less than 19 N/m
D: Peel strength of less than 14 N/m

### <Swelling resistance of electrode>

A produced laminate cell-type lithium ion secondary battery was left at rest in a 25°C environment for 5 hours and was then subjected to 100 cycles of a charge/discharge operation to 4.2 V with a charge/discharge rate of 1C in a 45°C environment.

After 100 cycles of charging and discharging, charging was performed at 1C in a 25°C environment, the cell was dismantled in a charged state to remove the negative electrode, and the thickness (d2) of the negative electrode (excluding the thickness of the current collector) was measured. The rate of change relative to the thickness (d0) of the negative electrode (excluding the thickness of the current collector) prior to production of the lithium ion secondary battery was determined (post-cycling swelling characteristic = {(d2 - d0)/d0} × 100(%)), and was judged by the following standard. A smaller value for the post-cycling swelling characteristic indicates that there is less swelling of the post-cycling negative electrode.
A: Post-cycling swelling characteristic of less than 35%
B: Post-cycling swelling characteristic of not less than 35% and less than 40%
C: Post-cycling swelling characteristic of not less than 40% and less than 45%
D: Post-cycling swelling characteristic of 45% or more

### <Cycle characteristics of secondary battery>

A produced laminate cell-type lithium ion secondary battery was left at rest in a 25°C environment for 5 hours and was then subjected to a charge/discharge operation to 4.2 V at a charge rate of 1C and to 3.0 V at a discharge rate of 1C in a 25°C environment. The initial capacity C0 was measured. Charging and discharging were repeated in the same manner in a 45°C environment, and the capacity C3 after 100 cycles was measured.

The rate of capacity change ΔC expressed by ΔC = (C3/C0) × 100(%) was calculated, and cycle characteristics were evaluated by the following standard. A higher value for the rate of capacity change ΔC indicates better cycle characteristics.
A: ΔC of 86% or more
B: ΔC of not less than 80% and less than 86%
C: ΔC of not less than 75% and less than 80%
D: ΔC of less than 75%

### (Example 1)

### <Production of particulate polymer>

### [Production of cyclohexane solution of block copolymer]

A pressure-resistant reactor was charged with 233.3 kg of cyclohexane, 54.2 mmol of N,N,N',N'-tetramethylethylenediamine (TMEDA), and 25.0 kg of styrene as an aromatic vinyl monomer. These materials were stirred at 40°C while 1806.5 mmol of n-butyllithium was added thereto as a polymerization initiator, and were heated to 50°C while polymerization was carried out for 1 hour. The polymerization conversion rate of styrene was 100%. Next, temperature control was performed to maintain a temperature of 50°C to 60°C while continuously adding 75.0 kg of isoprene into the pressure-resistant reactor over 1 hour. The polymerization reaction was continued for 1 hour after completing addition of the isoprene. The polymerization conversion rate of isoprene was 100%. Next, 740.6 mmol of dichlorodimethylsilane was added into the pressure-resistant reactor as a coupling agent and a coupling reaction was performed for 2 hours. Thereafter, 3612.9 mmol of methanol was added to the reaction liquid and was thoroughly mixed therewith to deactivate active terminals. Next, 0.05 parts of 4-[[4,6-bis(octylthio)-1,3,5-triazin-2-yl]amino]-2,6-di-tert-butylphenol (H1) as a hindered phenol antioxidant, 0.09 parts of 3,9-bis(octadecyloxy)-2,4,8,10-tetraoxa-3,9-diphosphaspiro[5.5]undecane (P1) as a phosphite antioxidant, and 0.03 parts of EDTA as a metal trapping agent were added to 100 parts of the reaction liquid (containing 30.0 parts of polymer component) and were mixed therewith to obtain a block copolymer solution.

### [Emulsification]

Sodium alkylbenzene sulfonate was dissolved in deionized water to produce a 5% aqueous solution.

A tank was charged with 500 g of the obtained block copolymer solution and 500 g of the obtained aqueous solution, and preliminary mixing of these materials was performed by stirring. Next, a metering pump was used to transfer the preliminary mixture from the tank to a continuous high-performance emulsifying and dispersing device (produced by Pacific Machinery & Engineering Co., Ltd.; product name: Milder MDN303V) at a rate of 100 g/min, and the preliminary mixture was stirred at a rotation speed of 15,000 rpm to cause emulsification of the preliminary mixture and obtain an emulsion.

Cyclohexane in the obtained emulsion was subsequently vacuum evaporated in a rotary evaporator. Thereafter, the emulsion resulting from this evaporation was left to separate for 1 day in a chromatographic column equipped with a stop-cock, and the lower layer portion after separation was removed to perform concentration.

Finally, the upper layer portion was filtered through a 100-mesh screen to obtain a water dispersion (block copolymer latex) containing a particulate block copolymer (core particles).

### [Graft polymerization and cross-linking]

After adding 675 parts of deionized water into a polymerization reactor equipped with a stirrer, 20 parts of methacrylic acid was added thereto. Stirring was performed by an impeller of the polymerization reactor while 100 parts (in terms of block copolymer) of the obtained block copolymer latex was added into the polymerization reactor, and nitrogen purging of the polymerization reactor was performed. The diluted block polymer latex was then heated to a temperature of 30°C under stirring.

A separate vessel was used to produce a solution containing 7 parts of deionized water, and 0.01 parts of ferrous sulfate (produced by Chubu Chelest Co., Ltd.; product name: Frost Fe) and 0.32 parts of sodium formaldehyde sulfoxylate (produced by Sumitomo Seika Chemicals Co., Ltd.; product name: SFS) as reducing agents. After adding the obtained solution into the polymerization reactor, 0.35 parts of tert-butyl hydroperoxide (produced by NOF Corporation; product name: PERBUTYL H) was added as an oxidizing agent, and a reaction was carried out at 30°C for 1 hour and then at 70°C for 2 hours. The polymerization conversion rate was 99%.

This yielded a water dispersion of a particulate polymer formed of a graft polymer that was obtained through graft polymerization and cross-linking of the core particles containing the block copolymer.

The obtained water dispersion of the particulate polymer was used to measure the surface acid content and the median diameter of the particulate polymer. The particle stability of the particulate polymer was also evaluated. The results are shown in Table 1.

### <Production of particulate binder>

A vessel A was charged with a mixture of 33 parts of 1,3-butadiene as an aliphatic conjugated diene monomer, 62 parts of styrene as an aromatic vinyl monomer, 4 parts of itaconic acid as a carboxyl group-containing monomer, 0.3 parts of tert-dodecyl mercaptan as a chain transfer agent, and 0.3 parts of sodium lauryl sulfate as an emulsifier. Addition of the mixture to a pressure-resistant vessel B from the vessel A was started, and, simultaneously thereto, addition of 1 part of potassium persulfate to the pressure-resistant vessel B as a polymerization initiator was started to initiate polymerization. A reaction temperature of 75°C was maintained.

Once 4 hours had passed from the start of polymerization (once 70% of the mixture had been added into the pressure-resistant vessel B), 1 part of 2-hydroxyethyl acrylate was added into the pressure-resistant vessel B as a hydroxy group-containing monomer over 1 hour and 30 minutes.

Addition of the total amount of the above-described monomers was completed 5 hours and 30 minutes after the start of polymerization. Heating was subsequently performed to 85°C and a reaction was carried out for 6 hours.

Once the polymerization conversion rate reached 97%, cooling was performed to quench the reaction to yield a mixture containing a particulate binder. The mixture containing the particulate binder was adjusted to pH 8 through addition of 5% sodium hydroxide aqueous solution. Thereafter, unreacted monomer was removed by thermal-vacuum distillation. Cooling was then performed to obtain a water dispersion (solid content concentration: 40%) containing a particulate binder having a median diameter of 0.15 µm.

The obtained water dispersion of the particulate binder was used to measure the median diameter of the particulate binder. The result is shown in Table 1.

### <Production of binder composition for non-aqueous secondary battery negative electrode>

A mixture was obtained by loading the water dispersion of the particulate polymer and the water dispersion of the particulate binder into a vessel such that the mass ratio of the particulate polymer and the particulate binder was 70:30. The obtained mixture was stirred for 1 hour using a stirrer (produced by SHINTO Scientific Co., Ltd.; product name: Three-One Motor) to obtain a binder composition for a negative electrode.

The amount of antioxidant and the amount of metal trapping agent in the binder composition were measured. The results are shown in Table 1.

### <Production of slurry composition for non-aqueous secondary battery negative electrode>

A mixture was obtained by adding 100 parts of artificial graphite (tap density: 0.85 g/cm³; capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Nippon Paper Industries Co., Ltd.; product name: MAC-350HC) as a thickener into a planetary mixer equipped with a disper blade. The resultant mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixed liquid. Deionized water and 2.0 parts in terms of solid content of the binder composition produced as described above were added to the obtained mixed liquid, and the final solid content concentration was adjusted to 48%. Further mixing was performed for 10 minutes, and then a defoaming process was carried out under reduced pressure to yield a slurry composition for a negative electrode having good fluidity.

Slurry composition stability was evaluated during production of the slurry composition for a negative electrode, and the obtained slurry composition for a negative electrode was used to evaluate coatability. The results are shown in Table 1.

### <Formation of negative electrode>

The obtained slurry composition for a negative electrode was applied onto copper foil (current collector) of 15 µm in thickness by a comma coater such as to have a coating weight after drying of 11 mg/cm². The applied slurry composition was dried by conveying the copper foil inside a 60°C oven for 2 minutes at a speed of 0.5 m/min. Thereafter, 2 minutes of heat treatment was performed at 120°C to obtain a negative electrode web.

The negative electrode web was rolled by roll pressing to obtain a negative electrode having a negative electrode mixed material layer density of 1.75 g/cm³.

Peel strength and swelling resistance of the negative electrode were evaluated. The results are shown in Table 1.

### <Formation of positive electrode>

A slurry composition for a positive electrode was obtained by combining 100 parts of LiCoO₂ having a median diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent such that the total solid content concentration was 70%, and mixing these materials using a planetary mixer.

The obtained slurry composition for a positive electrode was applied onto aluminum foil (current collector) of 20 µm in thickness by a comma coater such as to have a coating weight after drying of 23 mg/cm². The applied slurry composition was dried by conveying the aluminum foil inside a 60°C oven for 2 minutes at a speed of 0.5 m/min. Thereafter, 2 minutes of heat treatment was performed at 120°C to obtain a positive electrode web.

The positive electrode web was rolled by roll pressing to obtain a positive electrode having a positive electrode mixed material layer density of 4.0 g/cm³.

### <Preparation of separator>

A separator made from a single layer of polypropylene (produced by Celgard, LLC.; product name: Celgard 2500) was prepared as a separator composed of a separator substrate.

### <Production of lithium ion secondary battery>

A separator (microporous membrane of 20 µm in thickness made from polypropylene) was provided in-between a post-pressing positive electrode for a lithium ion secondary battery and a post-pressing negative electrode for a lithium ion secondary battery that were produced as described above, in an order of separator/positive electrode/separator/negative electrode to obtain a laminate. Next, the laminate of electrodes and separators was wound around a core of 20 mm in diameter to obtain a roll including a positive electrode, a separator, and a negative electrode. Next, the obtained roll was compressed to a thickness of 4.5 mm from one direction at a rate of 10 mm/s to obtain a flattened product. Note that the flattened product that was obtained had an elliptical shape in plan view, and the ratio of the major axis to the minor axis (major axis/minor axis) was 7.7.

A non-aqueous electrolyte solution (LiPF₆ solution of 1.0 M in concentration; solvent: mixed solvent of ethylene carbonate (EC)/ethyl methyl carbonate (EMC) = 3/7 (mass ratio) having 2 volume% of vinylene carbonate (VC) added as an additive) was prepared.

Next, the flattened product was housed in a laminate case made from aluminum with the non-aqueous electrolyte solution. After connecting a negative electrode lead and a positive electrode lead at specific locations, an opening of the laminate case was sealed by heat to thereby produce a laminate-type lithium ion secondary battery as a non-aqueous secondary battery. The obtained secondary battery had a pouch shape of 35 mm (width) × 48 mm (height) × 5 mm (thickness) and a nominal capacity of 700 mAh.

Cycle characteristics of the lithium ion secondary battery were evaluated. The result is shown in Table 1.

### (Example 2)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that the amount of methacrylic acid was changed to 10 parts when performing graft polymerization and cross-linking in production of the particulate polymer. Evaluations were conducted in the same manner as in Example 1. The results are shown in Table 1.

### (Example 3)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that the amount of methacrylic acid was changed to 30 parts when performing graft polymerization and cross-linking in production of the particulate polymer. Evaluations were conducted in the same manner as in Example 1. The results are shown in Table 1.

### (Example 4)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 10 parts of acrylic acid was used instead of methacrylic acid as a hydrophilic monomer in production of the particulate polymer. Evaluations were conducted in the same manner as in Example 1. The results are shown in Table 1.

### (Example 5)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 10 parts of itaconic acid was used instead of methacrylic acid as a hydrophilic monomer in production of the particulate polymer. Evaluations were conducted in the same manner as in Example 1. The results are shown in Table 1.

### (Example 6)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 10 parts of 2-hydroxyethyl acrylate was used instead of methacrylic acid as a hydrophilic monomer in production of the particulate polymer. Evaluations were conducted in the same manner as in Example 1. The results are shown in Table 1.

### (Example 7)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 0.05 parts of stearyl 3-(3,5-di-tert-butyl-4-hydroxyphenyl)propionate (H2) as a hindered phenol antioxidant, 0.09 parts of 3,9-bis(2,6-di-tert-butyl-4-methylphenoxy)-2,4,8,10-tetraoxa-3,9-diphosphasp iro[5.5]undecane (P2) as a phosphite antioxidant, and 0.03 parts of EDTA as a metal trapping agent were added when producing a cyclohexane solution of a block copolymer in production of the particulate polymer. Evaluations were conducted in the same manner as in Example 1. The results are shown in Table 1.

### (Example 8)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 0.05 parts of pentaerythritol tetrakis[3-(3,5-di-tert-butyl-4-hydroxyphenyl)propionate] (H3) as a hindered phenol antioxidant, 0.09 parts of 2,2-methylenebis(4,6-di-t-butylphenyl) 2-ethylhexyl phosphite (P3) as a phosphite antioxidant, and 0.03 parts of NTA as a metal trapping agent were added when producing a cyclohexane solution of a block copolymer in production of the particulate polymer. Evaluations were conducted in the same manner as in Example 1. The results are shown in Table 1.

### (Example 9)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 0.05 parts of 2,6-di-tert-butyl-p-cresol (H5) as a hindered phenol antioxidant, 0.09 parts of tris(2,4-di-tert-butylphenyl) phosphite (P4) as a phosphite antioxidant, and 0.05 parts of CyDTA as a metal trapping agent were added when producing a cyclohexane solution of a block copolymer in production of the particulate polymer. Evaluations were conducted in the same manner as in Example 1. The results are shown in Table 1.

### (Example 10)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that the amount of 4-[[4,6-bis(octylthio)-1,3,5-triazin-2-yl]amino]-2,6-di-tert-butylphenol (H1 as a hindered phenol antioxidant was changed to 0.02 parts and the amount of 3,9-bis(octadecyloxy)-2,4,8,10-tetraoxa-3,9-diphosphaspiro[5.5]undecane (P1) as a phosphite antioxidant was changed to 0.33 parts when producing a cyclohexane solution of a block copolymer in production of the particulate polymer. Evaluations were conducted in the same manner as in Example 1. The results are shown in Table 1.

### (Example 11)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that the amount of 4-[[4,6-bis(octylthio)-1,3,5-triazin-2-yl]amino]-2,6-di-tert-butylphenol (H1) as a hindered phenol antioxidant was changed to 0.25 parts and the amount of 3,9-bis(octadecyloxy)-2,4,8,10-tetraoxa-3,9-diphosphaspiro[5.5]undecane (P1) as a phosphite antioxidant was changed to 0.06 parts when producing a cyclohexane solution of a block copolymer in production of the particulate polymer. Evaluations were conducted in the same manner as in Example 1. The results are shown in Table 1.

### (Example 12)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that the amount of 4-[[4,6-bis(octylthio)-1,3,5-triazin-2-yl]amino]-2,6-di-tert-butylphenol (H1) as a hindered phenol antioxidant was changed to 0.8 parts and 3,9-bis(octadecyloxy)-2,4,8,10-tetraoxa-3,9-diphosphaspiro[5.5]undecane (P1) was not used as a phosphite antioxidant when producing a cyclohexane solution of a block copolymer and performing graft polymerization and cross-linking in production of the particulate polymer. Evaluations were conducted in the same manner as in Example 1. The results are shown in Table 1.

### (Example 13)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that EDTA was not used as a metal trapping agent when producing a cyclohexane solution of a block copolymer and performing graft polymerization and cross-linking in production of the particulate polymer. Evaluations were conducted in the same manner as in Example 1. The results are shown in Table 1.

### (Example 14)

A particulate polymer (binder composition for a negative electrode), a slurry composition for a negative electrode, a negative electrode, a positive electrode, a separator, and a secondary battery were produced or prepared in the same way as in Example 1 with the exception that the water dispersion of the particulate polymer was used in that form as a binder composition for a non-aqueous secondary battery negative electrode without using a water dispersion of a particulate binder. Evaluations were conducted in the same manner as in Example 1. The results are shown in Table 1.

### (Comparative Example 1)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 25.0 kg of isoprene was used instead of 25.0 kg of styrene, the additive amount of n-butyllithium was changed to 903.25 mmol, and a coupling reaction using a coupling agent was not performed in production of the particulate polymer (i.e., a homopolymer of isoprene was produced instead of a block copolymer). Evaluations were conducted in the same manner as in Example 1. The results are shown in Table 1.

### (Comparative Example 2)

Production or preparation of a particulate block copolymer, a binder composition for a negative electrode, a slurry composition for a negative electrode, a negative electrode, a positive electrode, a separator, and a secondary battery was attempted in the same way as in Example 1 with the exception that graft polymerization and cross-linking were not performed in production of the particulate polymer, and a water dispersion (block copolymer latex) containing a particulate block copolymer (core particles) was used instead of a water dispersion of a particulate polymer formed of a graft polymer in production of the binder composition for a negative electrode. However, excessive thickening of the slurry composition occurred, and a negative electrode could not be produced.

### (Comparative Example 3)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that the amount of styrene was changed to 35.0 kg and the amount of isoprene was changed to 65.0 kg when producing a block copolymer in production of the particulate polymer. Evaluations were conducted in the same manner as in Example 1. The results are shown in Table 1.

### (Comparative Example 4)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 4-[[4,6-bis(octylthio)-1,3,5-triazin-2-yl]amino]-2,6-di-tert-butylphenol (HI), 3,9-bis(octadecyloxy)-2,4,8,10-tetraoxa-3,9-diphosphaspiro[5.5]undecane (P1), and EDTA were not used in production of the particulate polymer. Evaluations were conducted in the same manner as in Example 1. The results are shown in Table 1.

### (Comparative Example 5)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 0.15 parts of methacrylic acid 2-hydroxy-3-(4-anilinoanilino)propyl ester was used instead of 4-[[4,6-bis(octylthio)-1,3,5-triazin-2-yl]amino]-2,6-di-tert-butylphenol (H1), and 3,9-bis(octadecyloxy)-2,4,8,10-tetraoxa-3,9-diphosphaspiro[5.5]undecane (P1) and EDTA were not used in production of the particulate polymer. Evaluations were conducted in the same manner as in Example 1. The results are shown in Table 1.

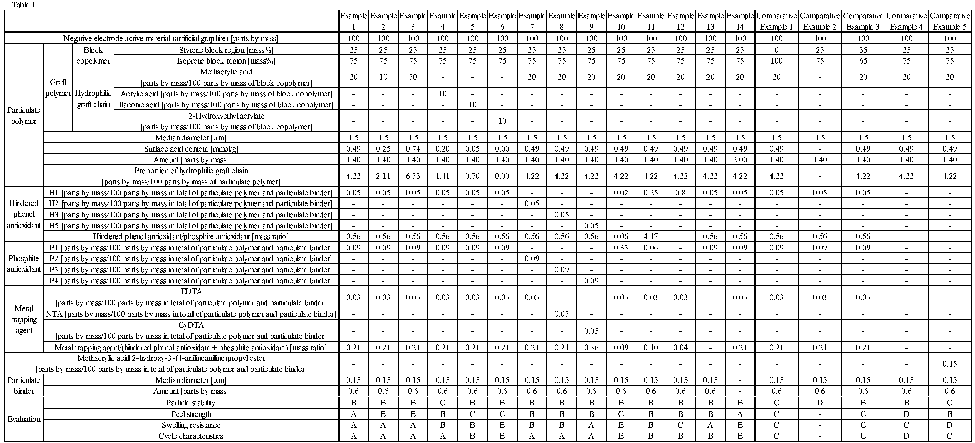

It can be seen from Table 1 that an electrode having excellent peel strength and a secondary battery having excellent cycle characteristics were obtained in each of Examples 1 to 14.

It can also be seen from Table 1 that electrode peel strength decreased and secondary battery cycle characteristics deteriorated in Comparative Example 1 in which an isoprene block region was not included, Comparative Example 3 in which the proportional content of the isoprene block region, and Comparative Examples 4 and 5 in which a hindered phenol antioxidant was not included. Moreover, it can be seen that a slurry composition could not be well produced in Comparative Example 2 in which a hydrophilic graft chain was not included.

### (Example 15)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that a mixture of 8 parts of acrylamide and 2 parts of hydroxyethylacrylamide was used instead of methacrylic acid as a hydrophilic monomer in production of the particulate polymer. Evaluations were conducted in the same manner as in Example 1. The results are shown in Table 2.

### (Example 16)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that 5 parts of p-styrene sulfonic acid was used instead of methacrylic acid as a hydrophilic monomer in production of the particulate polymer. Evaluations were conducted in the same manner as in Example 1. The results are shown in Table 2.

### (Example 17)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that a mixture of 5 parts of 2-hydroxyethyl acrylate and 5 parts of vinyl acetate was used instead of methacrylic acid as a hydrophilic monomer in production of the particulate polymer. Evaluations were conducted in the same manner as in Example 1. The results are shown in Table 2.

### (Example 18)

A particulate polymer, a particulate binder, a binder composition for a negative electrode, a slurry composition for a negative electrode, a negative electrode, a positive electrode, a separator, and a secondary battery were produced or prepared in the same way as in Example 1 with the exception that a mixture of 3 parts of methoxy polyethylene glycol acrylate (LIGHT ACRYLATE 130A produced by Kyoeisha Chemical Co., Ltd.) and 7 parts of tetrahydrofurfuryl acrylate (LIGHT ACRYLATE THF-A produced by Kyoeisha Chemical Co., Ltd.) was used instead of methacrylic acid as a hydrophilic monomer in production of the particulate polymer. Evaluations were conducted in the same manner as in Example 1. The results are shown in Table 2.

### (Example 19)

A particulate binder, a binder composition for a negative electrode, a slurry composition for a negative electrode, a negative electrode, a positive electrode, a separator, and a secondary battery were produced or prepared in the same way as in Example 1 with the exception that a particulate polymer produced as described below was used. Evaluations were conducted in the same manner as in Example 1. The results are shown in Table 2.

### <Production of particulate polymer>

### [Production of cyclohexane solution of block copolymer]

A pressure-resistant reactor was charged with 233.3 kg of cyclohexane, 54.2 mmol of N,N,N',N'-tetramethylethylenediamine (TMEDA), and 25.0 kg of styrene as an aromatic vinyl monomer. These materials were stirred at 40°C while 1806.5 mmol of n-butyllithium was added thereto as a polymerization initiator, and were heated to 50°C while polymerization was carried out for 1 hour. The polymerization conversion rate of styrene was 100%. Next, temperature control was performed to maintain a temperature of 50°C to 60°C while continuously adding 75.0 kg of isoprene into the pressure-resistant reactor over 1 hour. The polymerization reaction was continued for 1 hour after completing addition of the isoprene. The polymerization conversion rate of isoprene was 100%. Next, 740.6 mmol of dichlorodimethylsilane was added into the pressure-resistant reactor as a coupling agent and a coupling reaction was performed for 2 hours. Thereafter, 3612.9 mmol of methanol was added to the reaction liquid and was thoroughly mixed therewith to deactivate active terminals. Next, 0.05 parts of 4-[[4,6-bis(octylthio)-1,3,5-triazin-2-yl]amino]-2,6-di-tert-butylphenol (H1) as a hindered phenol antioxidant, 0.09 parts of 3,9-bis(octadecyloxy)-2,4,8,10-tetraoxa-3,9-diphosphaspiro[5.5]undecane (P1) as a phosphite antioxidant, and 0.03 parts of EDTA as a metal trapping agent were added to 100 parts of the reaction liquid (containing 30.0 parts of polymer component) and were mixed therewith to obtain a cyclohexane solution of a block copolymer.

### [Addition of coupling agent]

N-2-(aminoethyl)-3-aminopropylmethyldimethoxysilane (KBM-602) as a coupling agent was added to the obtained cyclohexane solution of the block copolymer in a proportion of 0.15 parts per 100 parts of the block copolymer to obtain a block copolymer solution.

### [Emulsification]

A mixture obtained by mixing sodium alkylbenzene sulfonate, sodium polyoxyethylene alkyl sulfosuccinate, and sodium polyoxyethylene alkyl ether sulfate in a ratio of 1:1:1 (by mass) was dissolved in deionized water to produce a 5% aqueous solution.

A tank was charged with 500 g of the obtained block copolymer solution and 500 g of the obtained aqueous solution, and preliminary mixing of these materials was performed by stirring. Next, a metering pump was used to transfer the preliminary mixture from the tank to a continuous high-performance emulsifying and dispersing device (produced by Pacific Machinery & Engineering Co., Ltd.; product name: Milder MDN303V) at a rate of 100 g/min, and the preliminary mixture was stirred at a rotation speed of 15,000 rpm to cause emulsification of the preliminary mixture and obtain an emulsion.

Cyclohexane in the obtained emulsion was subsequently vacuum evaporated in a rotary evaporator. Thereafter, the emulsion resulting from this evaporation was left to separate for 1 day in a chromatographic column equipped with a stop-cock, and the lower layer portion after separation was removed to perform concentration.

Finally, the upper layer portion was filtered through a 100-mesh screen to obtain a water dispersion (block copolymer latex) containing a particulate block copolymer (core particles).

### [Graft polymerization and cross-linking]

The obtained block copolymer latex was diluted by adding 850 parts of deionized water per 100 parts in terms of the block copolymer. The diluted block copolymer latex was loaded into a polymerization reactor that was equipped with a stirrer and had been purged with nitrogen, and was then heated to a temperature of 30°C under stirring.

A separate vessel was used to produce a dilute solution of methacrylic acid by mixing 10 parts of methacrylic acid as a hydrophilic monomer and 16 parts of deionized water. The dilute solution of methacrylic acid was added over 30 minutes into the polymerization reactor that had been heated to 30°C.

A separate vessel was also used to produce a solution containing 7 parts of deionized water and 0.01 parts of ferrous sulfate (produced by Chubu Chelest Co., Ltd.; product name: Frost Fe) as a reducing agent. After adding the obtained solution into the polymerization reactor, 0.5 parts of 1,1,3,3-tetramethylbutyl hydroperoxide (produced by NOF Corporation; product name: PEROCTA H) was added as an oxidizing agent, and a reaction was carried out at 30°C for 1 hour and then at 70°C for 2 hours. The polymerization conversion rate was 99%.

This yielded a water dispersion of a particulate polymer formed of a graft polymer that was obtained through graft polymerization and cross-linking of the core particles containing the block copolymer.

The obtained water dispersion of the particulate polymer was used to measure the surface acid content and the volume-average particle diameter of the particulate polymer. Particle stability of the particulate polymer was also evaluated. The results are shown in Table 2.

### (Example 20)

A particulate polymer, a particulate binder, a binder composition for a negative electrode, a slurry composition for a negative electrode, a negative electrode, a positive electrode, a separator, and a secondary battery were produced or prepared in the same way as in Example 19 with the exception that 3-glycidoxypropylmethyldiethoxysilane (KBE-402) was used instead of N-2-(aminoethyl)-3-aminopropylmethyldimethoxysilane as a coupling agent added to a cyclohexane solution of a block copolymer in production of the particulate polymer. Evaluations were conducted in the same manner as in Example 1. The results are shown in Table 2.

### (Example 21)

A particulate polymer, a particulate binder, a binder composition for a negative electrode, a slurry composition for a negative electrode, a negative electrode, a positive electrode, a separator, and a secondary battery were produced or prepared in the same way as in Example 19 with the exception that bis(dioctylpyrophosphate)oxyacetate titanate (PLENACT 138S) was used instead of N-2-(aminoethyl)-3-aminopropylmethyldimethoxysilane as a coupling agent added to a cyclohexane solution of a block copolymer in production of the particulate polymer. Evaluations were conducted in the same manner as in Example 1. The results are shown in Table 2.

**Table 2**

| | | | | Example 15 | Example 16 | Example 171 | Example 18 | Example 19 | Example 20 | Example 21 |
|---|---|---|---|---|---|---|---|---|---|---|
| Negative electrode active material (artificial graphite) [parts by mass] | | | | 100 | 100 | 100 | 100 | 100 | 100 | 100 |
| | | Block copolymer | Styrene block region [mass%] | 25 | 25 | 25 | 25 | 25 | 25 | 25 |
| | | | Isoprene block region [mass%] | 75 | 75 | 75 | 75 | 75 | 75 | 75 |
| | | | Methacrylic acid [parts by mass/100 parts by mass ofblock copolymer] | - | - | - | - | 10 | 10 | 10 |
| | | | Acrylamide/hydroxyethylacrylamide (=8/2) [parts by mass/100 parts by mass ofblock copolymer | 10 | - | - | - | - | - | - |
| | | | p-Styrene sulfonic acid [parts by mass/100 parts by mass of block copolymer] | - | 5 | - | - | - | - | - |
| | Graft polymer | | 2-Hydroxyethyl acrylate [parts by mass/100 parts by mass of block copolymer] | - | - | 5 | - | - | - | - |
| | | Hydrophilic graft chain | Vinyl acetate [parts by mass/100 parts by mass of block copolymer] | - | - | 5 | - | - | - | - |
| | | | LIGHT ACRYLATE 130A/LIGHT ACRYLATE THF-A (=3/7) [parts by mass/100 parts by mass of block copolymer] | - | - | - | 10 | - | - | - |
| Particulate polymer | | | -2-(aminoethyl)-3-aminopropylmethyldimethoxysilane [parts by mass/100 parts by mass of block copolymer] | - | - | - | - | 0.15 | - | - |
| | | | 3-Glycidoxypropylmethyldiethoxysilane [parts by mass/100 parts by mass of block copolymer] | - | - | - | - | - | 0.15 | - |
| | | | Bis(dioctylpyrophosphate)oxyacetate titanate [parts by mass/100 parts by mass of block copolymer] | - | - | - | - | - | - | 0.15 |
| | Median diameter [µm] | | | 1.4 | 1.3 | 1.5 | 1.5 | 1.5 | 1.4 | 1.5 |
| | Surface acid content [mmol/g] | | | 0.04 | 0.14 | 0.02 | 0.03 | 0.15 | 0.24 | 0.11 |
| | Amourt [parts by mass] | | | 1.40 | 1.40 | 1.40 | 1.40 | 1.40 | 1.40 | 1.40 |
| | Proportion of hydrophilic graft chain [parts by mass/100 parts by mass of particulate polymer] | | | 2.110 | 1.200 | 2.110 | 2.110 | 2.110 | 2.110 | 2.110 |
| Hindered phenol antioxidant | H1 [parts by mass/100 parts by mass in total of particulate polymer and particulate binder] | | | 0.05 | 0.05 | 0.05 | 0.05 | 0.05 | 0.05 | 0.05 |
| | H2 [parts by mass/100 parts by mass in total of particulate polymer and particulate binder] | | | - | - | - | - | - | - | - |
| | H3 [parts by mass/100 parts by mass in total of particulate polymer and particulate binder] | | | - | - | - | - | - | - | - |
| | H5 [parts by mass/100 parts by mass in total of particulate polymer and particulate binder] | | | - | - | - | - | - | - | - |
| | Hindered phenol antioxidant/phosphite antioxidant [mass ratio] | | | 0.56 | 0.56 | 0.56 | 0.56 | 0.56 | 0.56 | 0.56 |
| Phosphite antioxidart | P1 [parts by mass/100 parts by mass in total of particulate polymer and particulate binder] | | | 0.09 | 0.09 | 0.09 | 0.09 | 0.09 | 0.09 | 0.09 |
| | P2 [parts by mass/100 parts by mass in total of particulate polymer and particulate binder] | | | - | - | - | - | - | - | - |
| | P3 [parts by mass/100 parts by mass in total of particulate polymer and particulate binder] | | | - | - | - | - | - | - | - |
| | P4 [parts by mass/100 parts by mass in total of particulate polymer and particulate binder] | | | - | - | - | - | - | - | - |
| Metal trapping agent | EDTA [parts by mass/100 parts by mass in total of particulate polymer and particulate binder] | | | 0.03 | 0.03 | 0.03 | 0.03 | 0.03 | 0.03 | 0.03 |
| | NTA [parts by mass/100 parts by mass in total of particulate polymer and particulate binder] | | | - | - | - | - | - | - | - |
| | CyDTA [parts by mass/100 parts by mass in total of particulate polymer and particulate binder] | | | - | - | - | - | - | - | - |
| | Metal trapping agent/(hindered phenol antioxidant + phosphite antioxidant) [mass ratio] | | | 0.21 | 0.21 | 0.21 | 0.21 | 0.21 | 0.21 | 0.21 |
| Particulate binder | Median diameter [µm] | | | 0.15 | 0.15 | 0.15 | 0.15 | 0.15 | 0.15 | 0.15 |
| | Amourt [parts bv mass] | | | 0.6 | 0.6 | 0.6 | 0.6 | 0.6 | 0.6 | 0.6 |
| Evaluation | Particle stability | | | B | C | B | B | A | A | A |
| | Peel strength | | | B | B | B | B | A | A | B |
| | Swelling resistance | | | B | A | A | A | A | A | A |
| | Cycle characteristics | | | B | A | A | A | B | A | B |

It can be seen from Table 2 that an electrode having excellent peel strength and a secondary battery having excellent cycle characteristics were obtained in each of Examples 15 to 21.

It can also be seen from Tables 1 and 2 that a particulate polymer having excellent particle stability compared to Examples 1 to 18 was obtained in each of Examples 19 to 21 in which graft polymerization and cross-linking were performed in the presence of a coupling agent.

### INDUSTRIAL APPLICABILITY

Through the presently disclosed binder composition for a non-aqueous secondary battery electrode and slurry composition for a non-aqueous secondary battery electrode, it is possible to form an electrode having excellent peel strength and a secondary battery having excellent cycle characteristics.

Moreover, the presently disclosed electrode for a non-aqueous secondary battery has excellent peel strength and can form a secondary battery having excellent cycle characteristics.

Furthermore, according to the present disclosure, a non-aqueous secondary battery having excellent cycle characteristics is obtained.

## Claims

1. A binder composition for a non-aqueous secondary battery electrode comprising:
a particulate polymer formed of a graft polymer that includes a hydrophilic graft chain and that is obtained through a graft polymerization reaction of not less than 1 part by mass and not more than 40 parts by mass, in total, of either or both of a hydrophilic monomer and a macromonomer with 100 parts by mass of core particles containing a block copolymer that includes an aromatic vinyl block region formed of an aromatic vinyl monomer unit and an isoprene block region formed of an isoprene unit, and in which proportional content of the isoprene block region is not less than 70 mass% and not more than 99 mass%; and
a hindered phenol antioxidant.

2. The binder composition for a non-aqueous secondary battery electrode according to claim 1, further comprising a phosphite antioxidant.

3. The binder composition for a non-aqueous secondary battery electrode according to claim 1 or 2, further comprising a metal trapping agent.

4. The binder composition for a non-aqueous secondary battery electrode according to any one of claims 1 to 3, wherein the particulate polymer has a median diameter of not less than 0.6 µm and not more than 2.5 µm.

5. The binder composition for a non-aqueous secondary battery electrode according to any one of claims 1 to 4, wherein
the hydrophilic graft chain includes an acidic group, and
the particulate polymer has a surface acid content of not less than 0.02 mmol/g and not more than 1.0 mmol/g.

6. The binder composition for a non-aqueous secondary battery electrode according to any one of claims 1 to 5, further comprising a particulate binder, wherein
the particulate binder is formed of either or both of a styrene-butadiene copolymer and an acrylic polymer.

7. The binder composition for a non-aqueous secondary battery electrode according to claim 6, wherein content of the particulate polymer is not less than 50 mass% and not more than 90 mass% of total content of the particulate polymer and the particulate binder.

8. A slurry composition for a non-aqueous secondary battery electrode comprising: an electrode active material; and the binder composition for a non-aqueous secondary battery electrode according to any one of claims 1 to 7.

9. An electrode for a non-aqueous secondary battery comprising an electrode mixed material layer formed using the slurry composition for a non-aqueous secondary battery electrode according to claim 8.

10. A non-aqueous secondary battery comprising a positive electrode, a negative electrode, a separator, and an electrolyte solution, wherein
at least one of the positive electrode and the negative electrode is the electrode for a non-aqueous secondary battery according to claim 9.

11. A method of producing a binder composition for a non-aqueous secondary battery electrode that is a method of producing the binder composition for a non-aqueous secondary battery electrode according to any one of claims 1 to 7, comprising:
a step of obtaining core particles by emulsifying a mixture containing a hindered phenol antioxidant, an aqueous medium, and a solution of a block copolymer that includes an aromatic vinyl block region formed of an aromatic vinyl monomer unit and an isoprene block region formed of an isoprene unit, and in which proportional content of the isoprene block region is not less than 70 mass% and not more than 99 mass%; and
a step of obtaining a particulate polymer formed of a graft polymer by providing the core particles with a hydrophilic graft chain.

12. The method of producing a binder composition for a non-aqueous secondary battery electrode according to claim 11, wherein the mixture further contains a phosphite antioxidant.

13. The method of producing a binder composition for a non-aqueous secondary battery electrode according to claim 11 or 12, wherein the mixture further contains a metal trapping agent.

14. The method of producing a binder composition for a non-aqueous secondary battery electrode according to any one of claims 11 to 13, wherein
the mixture further contains a coupling agent, and
the solution of the block copolymer, the hindered phenol antioxidant, the aqueous medium, and the coupling agent are mixed to obtain the mixture before the emulsifying.

15. The method of producing a binder composition for a non-aqueous secondary battery electrode according to any one of claims 11 to 13, further comprising a step of adding a coupling agent to an emulsion containing the core particles between the step of obtaining the core particles and the step of obtaining the particulate polymer.
